# Europäisches Patentamt
## European Patent Office
## Office européen des brevets

(19)

(11) Veröffentlichungsnummer: **0 073 010**
**B1**

(12) **EUROPÄISCHE PATENTSCHRIFT**

(45) Veröffentlichungstag der Patentschrift:
**11.03.87**

(51) Int. Cl.⁴: **G 11 B 23/04**

(21) Anmeldenummer: **82107508.2**

(22) Anmeldetag: **18.08.82**

(54) **Bandkassette, insbesondere Magnetbandkassette, mit Sichtfenstern.**

(30) Priorität: **26.08.81 DE 8124876 U**

(43) Veröffentlichungstag der Anmeldung:
**02.03.83 Patentblatt 83/9**

(45) Bekanntmachung des Hinweises auf die Patenterteilung:
**11.03.87 Patentblatt 87/11**

(84) Benannte Vertragsstaaten:
**AT BE CH DE FR GB IT LI NL SE**

(56) Entgegenhaltungen:
**EP - A - 0 030 367**
**CH - A - 526 834**
**US - A - 2 988 295**
**US - A - 3 704 841**

*Die Akte enthält technische Angaben, die nach dem Eingang der Anmeldung eingereicht wurden und die nicht in dieser Patentschrift enthalten sind.*

(73) Patentinhaber: **BASF Aktiengesellschaft,
Carl-Bosch-Strasse 38, D-6700 Ludwigshafen (DE)**

(72) Erfinder: **Buerkle, Ottmar, Jaegerpfad 8,
D-7600 Offenburg (DE)**
Erfinder: **Schmidts, Kurt, Kornstrasse 10, D-7640 Kehl
(DE)**
Erfinder: **Schneider, Alfred, 10, Rue de Marechal
Lyautey, F-67800 Hoenheim (FR)**
Erfinder: **Schuett, Walter, Linxer Strasse 29, D-7640 Kehl
(DE)**

## Beschreibung

Bandkassette, insbesondere Magnetbandkassette, mit mindestens einem Wickelkern/einer Spule für das Band und einem diese umschliessenden Kassettengehäuse mit Sichtfenstern, die durch Öffnungen in dem Gehäuse und mindestens zwei, diese abdeckende Transparentteile gebildet sind, die durch einen Trenn-Gehäuseteil getrennt sind.

Magnetkassetten, im besonderen Kompaktkassetten mit in Draufsicht einem Sichtfenster, das zwischen den Eintrittsöffnungen für die Wickeldorne des Geräts liegt, sind z.B. mit dem DE-GM 76 37 787, der US-PS 2 988 295 und der US-PS 3 565 367 bekannt. Dabei ist nur der Mittelteil der Bandwickel von aussen sichtbar.

Aus US-PS 3 704 841 ist eine Kompaktkassette bekannt, die in jeder ihrer Boden- und Deckelwände in letztere eingelassene lange, rechteckige Fenster aufweist. Jedes Fenster besitzt Öffnungen und Lagerringe für die Wickelkerne. Die Fenster voneinander trennende Trenn-Gehäuseteile sind nicht vorgesehen. In der Stärke sind die Fenster derartig dimensioniert, dass sie der Dicke der Kassettenwände genau entsprechen, was hohen Aufwand bei Herstellung und Montage der Fenster erfordert, insbesondere da die gesamte Innenfläche der Fenster zusammen mit den Innenflächen der Kassetten-Gehäusewände Führungsflächen für die Bandwickel bilden sollen.

Mit der EP-OS 30 367 ist eine Videocassette bekannt, in der an jeder Seitenwand dreiteilige Fenster vorgesehen sind, diedurch Stege voneinander getrennt sind und daher auch einzeln eingesetzt werden müssen. Der Innenseite zu müssen die Ebenen der Fenster mit den Innenflächen der Kassettenwände abschliessen, so dass wiederum erheblicher Aufwand für Herstellung und Zusammenbau der Kassette zu treiben ist.

Es sind ferner völlig transparente Kassettengehäuse bekannt, die vom Material her teuer sind.

Es ist Aufgabe der vorliegenden Erfindung, Bandkassetten, insbesondere Magnetbandkassetten, besser einsichtbar auszuführen, ohne die Gehäuse völlig transparent ausbilden zu müssen, so dass sie wirtschaftlicher in Serienproduktion herstellbar werden.

Die Aufgabe wird mit einer Bandkassette gemäss Anspruch 1 gelöst. Dadurch wird es einfach möglich, mehr als zwei Fenster an voneinander entfernten Stellen des Gehäuses vorzusehen, ohne zusätzuliche Einbaukosten tragen zu müssen.

Ausserdem wird neben einer einstückigen, kostengünstigen Herstellung auch eine Anordnung der Fenster im Kassettengehäuse möglich, die die Innenwände und Innenteile der Kassette weitgehendst kaum verändert, so dass Masse und Funktion der Kassette nicht beeinträchtigt, sondern eher verbessert werden.

In erfindungsgemässer Weiterbildung der Kassette kann der die Transparentteile aufnehmende Gehäuseteil Öffnungen und Vertiefungen für Transparentteile und Tragteil aufweisen. Dadurch können die Transparentteile und Tragteile gegenüber den Gehäuseinnenwänden in derselben Ebene oder auch versenkt angeordnet werden.

Ferner können die Vertiefungen am Rand der Öffnungen des Gehäuses und/oder am Trenn-Gehäuseteile vorgesehen sein, wodurch Positionier- und Dichtprobleme lösbar werden.

Weiterhin ist es zweckmässig, wenn mindestens ein Transparentteil mit einer Durchtrittsöffnung für einen Wickelkern ausgebildet ist. Andererseits kann auch der Tragteil mit mindestens einer Durchtrittsöffnung für einen Wickeldorn ausgebildet sein.

Vorteilhaft kann der Tragteil für die Transparentteile aus schmalen Stegen bestehen, die eine Aussparung begrenzen. Dadurch kann der Werkstoffbedarf bei ausreichender mechanischer Festigkeit des Gehäuses und der Fensteranordnung auch für die automatische Fertigung klein gehalten werden.

Zweckmässig sind die Stege mit den Transparentteilen als Spritzgussteil ausgebildet, dessen Angusspunkt auf einem der Stege liegt, so dass prozessbedingte Toleranzen symmetrisch auf die Fenster verteilt werden.

Die Vertiefungen am Gehäuse sind zweckmässig den Stegen entsprechende schmale Nuten, die zur wickeldorngenauen Ausrichtung der Transparentteile parallel zur Frontseite der Kassette verlaufen.

Praktisch ist die Aussparung zwischen den Stegen auch auf den übrigen zwei Seiten von Befestigungsstegen begrenzt, wodurch sich eine feste und dichte Ausbildung im Kassettenmittelteil erreichen lässt.

Die Bandkassette der eingangs definierten Art lässt sich noch weiter verbessern, wenn die Stege und/oder die mindestens zwei Transparentteile Orientierungsflächen zur lagerichtigen Positionierung an den Wandungen des jeweiligen Gehäuseteils der Kassette besitzen, wodurch auch bei automatischer Kassettenmontage eine grosse Montagesicherheit erzielbar wird.

Zweckmässig ist in jedem Transparentteil eine Durchtrittsöffnung für einen Wickeldorn und ein Lagerring für die Lagerung eines Wickelkerns einer Spule vorgesehen. Dadurch wird die aus Transparentteilen und ihrem Tragteil bestehende Fensteranordnung zu einem sehr wichtigen Teil des Kassettengehäuses und trägt zur Qualität der fertigen Kassette erheblich bei, da ausser Führungsflächen für Band und Bandwickel auch die Toleranzen der Wickelkern- und Bandwickellagerung und auch die Wickeldorn- und Wickelkerntoleranzen allein von der Güte der Fensteranordnung und deren Einbau in das Gehäuse bestimmt werden. Zur guten Abdichtung sind wenigstens aussen an den Längsseiten der Fensteranordnung Befestigungsstege vorgesehen.

Zur weiteren Orientierungsverbesserung kann am die Transparentteile tragenden Gehäuseteil eine der Aussparung entsprechende Erhebung vorgesehen sein, die auf zwei Seiten von Befestigungsstegen begrenzt ist.

Ferner können die Flächen der mindestens einen aus Transparentteilen und ihrem Tragteil gebildeten Fensteranordnung gegenüber der Ebene der zugehörigen Kassetteninnenwand vorstehen und Führungsflächen für Band und Bandwickel bilden. Wenn zwei einander gegenüberliegende Fensteranordnungen vorgesehen sind, können beide derartige Führungsflächen bilden.

Einzelheiten der Erfindung sind nachfolgender Beschreibung von in der Zeichnung dargestellten Ausführungsbeispielen der Erfindung entnehmbar.

In der Zeichnung ist dargestellt in

Figur 1 eine Kompaktkassette mit zwei waagerechten Sichtfenstern an der Oberseite, in Perspektive

Figur 2A das Gehäuseoberteil der Kassette aus Figur 1

Figur 2B eine erste Fensteranordnung mit einem scheibenförmigen Tragteil

Figur 3 eine zweite Fensteranordnung mit Stegen als Tragteil

Figur 4 ein Gehäuseteil ohne Transparentteile in Draufsicht von innen.

Eine Kompaktkassette 5 umfasst im wesentlichen das Gehäuse 4 mit oberen und unteren Teilen 6 und 7, die z.B. durch Schrauben verbunden sind. Öffnungen 9 und 10 dienen zum Durchtritt der Wickeldorne vom Gerät. Hinter den Öffnungen 9 und 10 befinden sich die Wickelkerne 11 und 12, deren Mitnahmezapfen 13 ebenfalls sichtbar sind. Auf der Verbindungsachse der Mittelpunkte der Öffnungen 9 und 10 sind zwei gleiche Fensteröffnungen 14a und 14b vorgesehen.

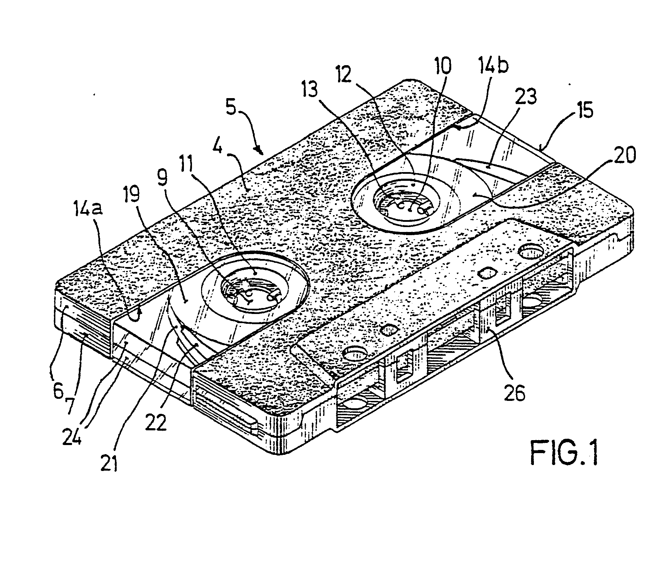

Die Innenenden der Öffnungen 14a und 14b sind als Halbkreise mit etwa den Aussendurchmessern der Wickelkerne 11 und 12 entsprechenden Durchmessern ausgebildet. Der Durchmesser ist auch kleiner oder grösser wählbar. Dadurch erscheinen bei undurchsichtigem dunkleren Gehäuse 4 die meist helleren Wickelkerne 11 und 12 in einer gabelförmigen Halterung gelagert. Die Fensteröffnungen 14a und 14b erstrecken sich geradlinig bis zur Gehäuseumrisskante 15, hier bis zu den kurzen Seiten der Gehäuserechteckform. Die Form und Anordnung der Fensteröffnungen 14 ist beliebig, solange die Festigkeitserfordernisse von Magnetbandkassetten gewahrt bleiben; dafür kann eine entsprechende Werkstoffauswahl getroffen werden. Die Fensteröffnungen 14a und 14b sind durch Transparentteile 16a und 16b abgedeckt, die die eigentlichen Fenster bilden. Teile 16a und 16b sind in Figur 1B auf einem scheibenförmigen gemeinsamen Tragteil oder Träger 17 angeordnet und auch mit diesem zusammen herstellbar. Transparentteile und Träger werden im folgenden zusammen als «Fensteranordnung» bezeichnet.

Die Transparentteile 16 sind mit rechtwinklig aufgebogenen Randteilen 24 versehen, deren Höhe beispielsweise der halben Schmalseitenhöhe des Gehäuses 4 entspricht, so dass sich nach dem Zusammenfügen von zwei Gehäuseteilen 6 und 7 mit gleichen Fensteranordnungen die genormte Kassettenseitenhöhe ergibt. In der Kassette 5 sind Bandrollen 19 und 20, ein Magnetband 21 sowie Bandführungs-Hebel 22 und 23 vorgesehen.

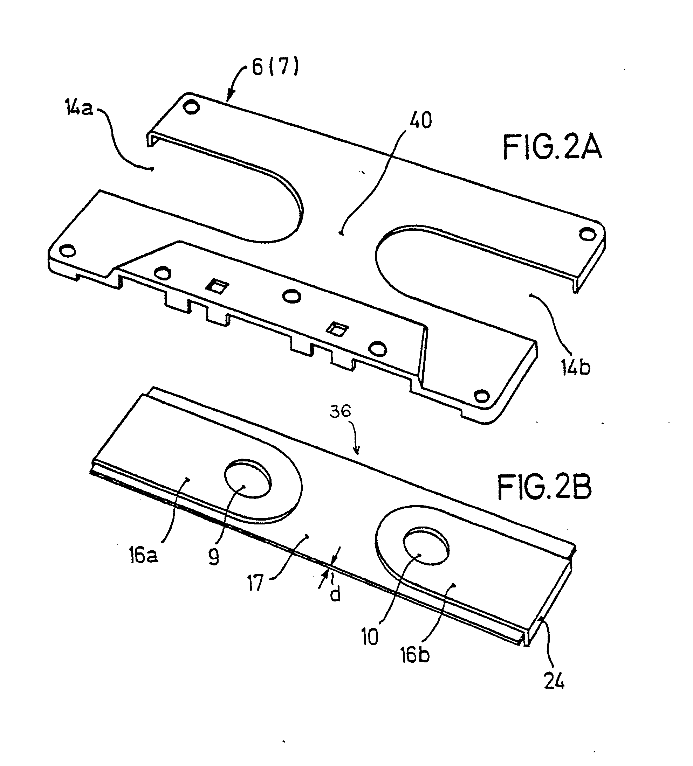

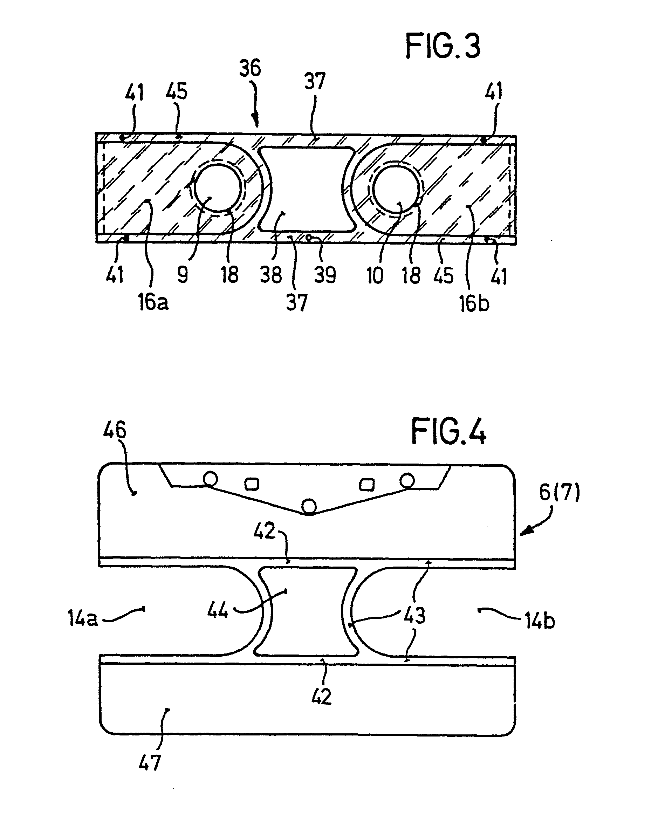

Um die Öffnungen 9 und 10 der Transparentteile herum sind in Figur 2B nicht sichtbare Lagerringe 18 für die Wickelkerne 11 und 12 vorgesehen (S. Fig. 3). Wie in Figur 2B dargestellt, hat der Träger 17 eine Dicke d, um die das Kassetteninnenmass zweimal vermindert wird. Bei Kassetten, bei denen nur diese Innenmasse eine Rolle spielen, ist eine entsprechende Änderung der Aussenmasse bei beibehaltener Wandstärke ohne weiteres möglich.

Bei Kompaktkassetten sind jedoch auch die Aussenmasse genormt, so dass ihre Änderung nicht möglich ist. Andererseits kann bei gleichem Werkstoff eine der Dicke d entsprechende Verminderung der Wandstärke der Kassette deren Festigkeit erheblich beeinträchtigen. Eine Verminderung der Dicke d ist z.B. auf Folienstärke möglich, so dass wenigstens ein Transport und eine Handhabung der zwei Fenster gleichzeitig erreichbar ist. Die Befestigung der Transparentteile auf einer solchen Folie ist in geeigneter Weise möglich, z.B. über eine Selbstklebfolie, über Adhäsions- oder statische Aufladungskräfte.

In Figur 3 ist eine weitere vorteilhafte Ausführung einer Fensteranordnung 36 dargestellt, worin der Tragteil für die Transparentteile 16a und 16b im wesentlichen aus Stegen 37 besteht. Diese Stege 37 haben z.B. eine Dicke von 0,7 mm und eine Breite von 2,9 mm und bestehen aus demselben Material wie die Transparentteile 16, z.B. aus Polystyrol. Zwischen den Stegen 37 und den Endteilen der Transparentteile 16a und 16b ergibt sich eine Aussparung 38. Die Stege 37 sind stark genug, der Fensteranordnung eine genügend grosse Biegesteifigkeit zu vermitteln, so dass dieses nach der Herstellung der Form automatisch entnommen und vorzugsweise durch die Aussparung 38 auf Magazin-Stangen aufgefädelt werden kann. Bei der Herstellung, die zweckmässig im Spritzgussverfahren erfolgt, liegt der Angusspunkt 39 vorteilhaft auf einem der Stege 37, wodurch die herstellungsbedingten Toleranzen von der Mitte der Anordnung nach beiden Seiten verteilt werden können, so dass sich symmetrische Verhältnisse für beide Transparentteile 16a und 16b ergeben. Der Angusspunkt 39 liegt beim Zusammenbau vorteilhaft der Gehäuseinnenwand zugewandt, so dass eine störende Erhebung in der Kassettenmitte vermieden wird. Die Auswurfstellen 41 der Anordnung 36 aus dem Spritzgusswerkzeug liegen zweckmässig in der Nähe der freien Enden der Transparentteile 16a und 16b.

Im Mittelteil oder Trenn-Gehäuseteil 40 des Gehäuses 4 sind als den Stegen 37 entsprechende Vertiefungen die Nuten 42 vorgesehen, die zweckmässig parallel zur Frontseite 26 der Kassette verlaufen. An den Umrissseiten der Öffnungen 14a und 14b jedes Gehäuseteils 6 oder 7 sind Befestigungskanten 43 vorgesehen, deren Tiefe ebenso wie die der Nuten 42 etwa der Dicke d der Stege 37 entspricht.

Entsprechend der Form der Aussparung 38 ist in der Mitte jedes Gehäuseteils 6 und 7 eine Positioniererhebung 44 vorgesehen, so dass ein passgenaues Einlegen der Fensteranordnung 36 ermöglicht wird. Die Form von Aussparung 38 und Erhebung 44 ist die eines seitlich eingedrückten Rechtecks. Die relativ langen Seiten des Rechtecks ergeben dabei Positionierungsflächen für die entsprechenden Orientierungsflächen der Stege 37 und Transparentteile 16a und 16b.

Den Befestigungskanten 43 am Gehäuseteil 6 und 7 entsprechen Befestigungsstege 45 an der Anordnung 36. Die Befestigung der Fensteranordnung 36 erfolgt in geeigneter Weise z.B. durch Verschweissen, wodurch sich eine gute Abdichtung zwischen Gehäuseteil 6 bzw. 7 und Fensteranordnung 36 ergibt. Im Innern des Gehäuseteils 6 oder 7 ergibt sich nach Zusammenbau eine plane Fläche auf demselben Niveau, bestehend aus den Teilinnenflächen der Erhebung 44, den Transparentteilen 16a und 16b sowie den Gehäuse-Innenwänden 46 und 47. Damit wird dafür gesorgt, dass die Band- und Bandwickelführungsfunktion der Gehäuse-Innenwände trotz Einsetzens grosser Transparentteile erhalten bleibt.

Eine notwendig grosse Biegefestigkeit der Gehäuseteile 6 und 7 ist vor Zusammenbau mit der Fensteranordnung ebenfalls sichergestellt, durch geeignete Werkstoffwahl und Auslegung der «Wespentaille» (Trenn-Gehäuseteil 40) der Gehäuseteile. Dabei können die Gehäuseteile 6 und 7 sowohl teilweise durchsichtig als auch völlig undurchsichtig ausgebildet sein, je nach dem verwendeten Werkstoff.

Es ist abweichend vom obengesagten auch möglich, die wesentlichsten Führungseigenschaften der Kassettenwände überwiegend auf die Fensteranordnung 36 zu übertragen durch entsprechende Dickenwahl der Stege 37, 41 und Fensterteile 16a und 16b sowie eine hochgenaue Herstellung der Stege 37, 41 und der Fensterflächen. Durch die Anordnung der Öffnungen 9 und 10 in den Fensterteilen 16a bzw. 16b und der Lagerringe 18 um diese Öffnungen ist eine weitere Verbesserung der Kassettenqualität möglich, was wiederum durch sehr genaue Herstellung eines zentralen Teils, nämlich der gemeinsamen Fensteranordnung, für jeweils ein Gehäuseteil erreichbar wird. Es sind auch weitere Ausführungen von Fensteranordnungen möglich, z.B. so, dass strahlenförmig zu den Öffnungen 9 oder 10 angeordnete Transparentteile mit entsprechend strahlenförmigen Stegen als Tragteile vorgesehen sind. Für eine Kassetten nach der Erfindung ist es prinzipiell unerheblich, welche Form und Anordnung die Transparentteile im Kassettengehäuse besitzen, sie müssen nur einen Abstand voneinander aufweisen, der durch einen oder mehrere durchsichtige oder nicht durchsichtige Trenn-Gehäuseteile gebildet wird.

## Patentansprüche

1. Bandkassette, insbesondere Magnetbandkassette, mit mindestens einem Wickelkern/einer Spule (19, 20) für das Band (21) und einem diese umschliessenden Kassettengehäuse (4) mit Sichtfenstern, die durch Öffnungen (14a, 14b) in dem Gehäuse und mindestens zwei diese abdeckende Transparentteile (16a imd 16b) gebildet sind, die durch einen Trenn-Gehäuseteil (40) getrennt sind, dadurch gekennzeichnet, dass die getrennten Transparentteile (16a und 16b) auf einem gemeinsamen Tragteil (17, 37) angeordnet und wenigstens teilweise in die Wandungen der jeweiligen Kassettengehäuseteile (66 und 7) eingelassen sind.

2. Kassette nach Anspruch 1, dadurch gekennzeichnet, dass der die Transparentteile (16a und 16b) aufnehmende Gehäuseteil (6 bzw. 7) Öffnungen /14a, 14b) und Vertiefungen (42, 43) für die Transparentteile (16a und 16b) und den Tragteil (37) aufweist.

3. Kassette nach Anspruch 2, dadurch gekennzeichnet, dass ein Teil der Vertiefungen (43) am Rand der Öffnungen (14a undf 14b) vorgesehen sind.

4. Kassette nach Anspruch 2 oder 3, dadurch gekennzeichnet, dass die Vertiefungen (42, 43) im Trenn-Gehäuseteil (40) vorgesehen sind.

5. Kassette nach einem der Ansprüche 1 bis 4, dadurch gekennzeichnet, dass mindestens ein Transparentteil (16a bzw. 16b) mit einer Durchtrittsöffnung (9, 10) für einen Wickeldorn ausgebildet ist.

6. Kassette nach Anspruch 5, dadurch gekennzeichnet, dass der Tragteil mit mindestens einer Durchtrittsöffnung (9, 10) für einen Wickeldorn ausgebildet ist.

7. Kassette nach einem der Ansprüche 1 bis 6, dadurch gekennzeichnet, dass der Tragteil aus schmalen Stegen (37) besteht, die eine Aussparung (38) begrenzen.

8. Kassette nach Anspruch 7, dadurch gekennzeichnet, dass die Stege (37) und/oder die Transparentteile (16a und 16b) Orientierungsflächen zur lagerichtigen Positionierung an den Wandungen des jeweiligen Gehäuseteils (6 bzw. 7) der Kassette (5) besitzen.

9. Kassette nach Anspruch 8, dadurch gekennzeichnet, dass in jedem Transparentteil (16a, 16b) eine Durchtrittsöffnung (9 bzw. 10) für einen Wikkeldorn und ein Lagerring (18) für die Lagerung des Wickelkerns/der Spule (19 bzw. 20) vorgesehen ist.

10. Kassette nach Anspruch 1 bis 9, gekennzeichnet durch wenigstens aussen an den Längsseiten vorgesehene Befestigungsstege (45).

11. Kassette nach Anspruch 7 oder 8, dadurch gekennzeichnet, dass die Stege (37) mit den Transparentteilen (16a und 16b) als Spritzgussteil ausgebildet sind, dessen Anspritzpunkt auf einem der Stege (37) liegt.

12. Kassette nach Anspruch 2 oder 7, dadurch gekennzeichnet, dass ein Teil der Vertiefungen (42, 43) den Stegen (37) entsprechende Nuten (42) sind, die parallel zur Frontseite (26) der Kassette (5) verlaufen.

13. Kassette nach Anspruch 7, dadurch gekennzeichnet, dass am die Transparentteile (15a und 16b) tragenden Gehäuseteil (6 bzw. 7) eine der Aussparung (38) entsprechende Erhebung (44) vorgesehen ist, die auf zwei Seiten von Befestigungsstegen (43) begrenzt ist.

14. Kassette nach einem der Ansprüche 1 bis 13, dadurch gekennzeichnet, dass die Flächen (16a, 16b) der mindestens einen aus Transparentteilen (16a und 16b) und ihrem Tragteil (17, 37) gebildeten Fensteranordnung (36) gegenüber der Ebene der zugehörigen Kassetteninnenwand (46, 47) vorstehen und Führungsflächen für Band (21) und Bandwickel (19, 20) bilden.

15. Kassette nach Anspruch 14, dadurch gekennzeichnet, dass zwei einander gegenüberliegende Fensteranordnungen (36) die Führungsflächen bilden.

## Claims

1. A tape cassette, especially a magnetic tape cassette, comprising at least one hub or reel (19, 20) für the tape (21) and a cassette housing (4), surrounding these, which possesses windows that are formed by apertures (14a, 14b) in the housing and at least two transparent members (16a and 16b) which are separated by a housing separator member (40), wherein the separated transparent members (16a and 16b) are arranged on a common carrier (17, 37) and are at least partially let into the walls of the respective cassette housing parts (6 and 7).

2. A cassette as claimed in claim 1, wherein the housing member (6, 7) receiving the transparent members (16a and 16b) has apertures (14a, 14b) and recesses (42, 43) for the transparent members (16a and 16b) and the carrier (37).

3. A cassette as claimed in claim 2, wherein some of the recesses (43) are provided at the edge of the apertures (14a and 14b).

4. A cassette as claimed in claim 2 or 3, wherein the recesses (42, 43) are provided in the housing separator member (40).

5. A cassette as claimed in any of claims 1 to 4, wherein at least one transparent member (16a, 16b) has an opening (9, 10) for admitting a drive spindle.

6. A cassette as claimed in claim 5, wherein the carrier has at least one opening (9, 10) for admitting a drive spindle.

7. A cassette as claimed in any of claims 1 to 6, wherein the carrier comprises narrow webs (37) which delimit a hole (38).

8. A cassette as claimed in claim 7, wherein the webs (37) and/or the transparent members (16a and 16b) are provided with locating surfaces for correct positioning on the walls of the relevant housing member (6, 7) of the cassette (5).

9. A cassette as claimed in claim 8, wherein each transparent member (16a, 16b) is provided with an opening (9, 10) for admitting a drive spindle, and with a bearing collar (18) for mounting the hub or reel (19, 20).

10. A cassette as claimed in claims 1 to 9, wherein fixing edges (45) are provided at least on the edges of the longitudinal sides.

11. A cassette as claimed in claim 7 or 8, wherein the webs (37) together with the transparent members (16a and 16b) are in the form of an injection molding whose gate mark is located on one of the webs (37).

12. A cassette as claimed in claim 2 or 7, wherein some of the recesses (42, 43) are grooves (42) which match the webs and run parallel to the front wall (26) of the cassette (5).

13. A cassette as claimed in claim 7, wherein a protrusion (44), which matches the hole (38), is provided on the housing part (6, 7) bearing the transparent members (16a and 16b), and is delimited on two sides by fixing edges (43).

14. A cassette as claimed in any of claims 1 to 13, wherein the windows (16a, 16b) of the at least one window arrangement (36) formed by transparent members (16a, 16b) and its carrier (17, 37) protrude beyond the surface of the housing inner wall (46, 47) associated therewith, and form guide surfaces for the tape (21) and tape roll(s) (19, 20).

15. A cassette as claimed in claim 14, wherein two window arrangements (36) which are located opposite one another form the guide surfaces.

## Revendications

1. Cassette de bande, en particulier cassette de bande magnétique, comportant au moins un noyau d'enroulement/une bobine (19, 20) pour la bande (21) et un boîtier de cassette (4) entourant ceux-ci et muni de voyants qui sont formés par des ouvertures (14a, 14b) dans le boîtier et au moins deux pièces transparentes (16a et 16b) qui recouvrent celles-ci et sont séparées par une partie de boîtier séparatrice (40), caractérisé par le fait que les pièces transparentes séparées (16a et 16b) sont montées sur une pièce support commune (17, 37) et sont emboîtées au moins partiellement dans les parois de la partie de boîtier de cassette (6 et 7) correspondante.

2. Cassette selon la revendication 1, caractérisée par le fait que la partie de boîtier (6 ou 7) recevant les pièces transparentes (16a et 16b) comporte des ouvertures (14a, 14b) et des évidements (42, 43) pour les pièces transparentes (16a et 16b) et la partie de support (37)

3. Cassette selon la revendication 2, caractérisée par le fait qu'une partie des évidements (43) sont ménagés sur le bord des ouvertures (14a, et 14b).

4. Cassette selon la revendication 2 ou 3, caractérisée par le fait que les évidements (42, 43) sont ménagés dans la partie de boîtier séparatrice (40).

5. Cassette selon l'une des revendications 1 à 4, caractérisée par le fait qu'au moins une pièce transparente (16a ou 16b) est munie d'une ouverture transversante (9, 10) pour un axe de bobinage.

6. Cassette selon la revendication 5, caractérisée par le fait que la partie de support est munie d'au moins une ouverture traversante (9, 10) pour un axe de bobinage.

7. Cassette selon l'une des revendications 1 à 6, caractérisée par le fait que la partie de support est constituée de barrettes étroites (37) qui délimitent une fenêtre (38).

8. Cassette selon la revendication 7, caractérisée par le fait que les barrettes (37) et/ou les pièces transparentes (16a et 16b) possèdent des surfaces d'orientation pour la mise en position correcte sur les parois de la partie de boîtier correspondante (6 ou 7) de la cassette (5).

9. Cassette selon la revendication 8 caractérisée par le fait que, dans chaque pièce transparente (16a, 16b), est prévue une ouverture traversante (9 ou 10) pour un axe de bobinage et un anneau d'appui (18) pour le logement du noyau d'enroulement de la bobine (19 ou 20).

10. Cassette selon les revendications 1 à 9, caractérisée par des barrettes de fixation (45) au moins à l'extérieur sur les faces longitudinales.

11. Cassette selon la revendication 7 ou 8, caractérisée par le fait que les barrettes (37) avec les pièces transparentes (16a et 16b) sont réalisées sous forme de pièce injectées, dont la point d'injection se trouve sur une des barrettes (37).

12. Cassette selon la revendication 2 ou 7, caractérisée par le fait qu'une partie des évidements (42, 43) sont des rainures (42) correspondant aux barrettes (37) et qui s'étendent parallèlement aux faces frontales (26) de la cassette (5).

13. Cassette selon la revendication 7, caractérisée par le fait que sur la partie de boitier (6 ou 7) portant les pièces transparentes (16a et 16b) est prévu une élévation (44) correspondant à la fenêtre (38) et qui est limitée aux deux côtés des barrettes de fixation (43).

14. Cassette selon l'une des revendications 1 à 13, caractérisée par le fait que les surfaces plates (16a, 16b) d'au moins un arrangement de fenêtres (36), formé de pièces transparentes (16a et 16b) et leur partie support (17, 37), font saillie par rapport au plan de la paroi intérieure de cassette associée (46, 47) et forment surfaces de guidage pour la bande (21) et la bobine de bande (19, 20).

15. Cassette selon la revendication 14, caractérisée par le fait que deux arrangements de fenêtres (36) se faisant face forment les surfaces de guidage.

FIG.1

FIG.2A

FIG.2B

FIG.3

FIG.4